# EUROPEAN PATENT APPLICATION

(11) **EP 2 045 223 A1**
(43) Date of publication of application: **08.04.2009**
(21) Application number: 08017426.1
(22) Date of filing: 03.10.2008
(51) Int. Cl.: C04B 35/532, C04B 38/00, A62B 23/00

(54) **Production of carbonaceous porous bodies for use in filtration systems**

(30) Priority: 05.10.2007 US 960602 P
(71) Applicant: HER MAJESTY THE QUEEN IN RIGHT OF CANADA AS REPRESENTED BY THE MINISTER OF NATIONAL DEFENCE OF HER MAJESTY'S CANADIAN GOV., Ottawa K1A OK2 (CA)
(72) Inventor: Cunningham, Nicholas, Brampton L6X 2S9 (CA); Evans, Michael, Elginburg Ontario K0H 1Mo (CA); Bang, Seol, Kingston Ontario K7L 2Y1 (CA)
(74) Representative: Jackson, Derek Charles

(57) **Abstract**

A porous, carbonaceous body for use in respiratory protection is produced by making a slurry of carbonaceous powder such as carbon black, a polymeric binder such as polyvinyl alcohol and a solvent, drying and grinding the slurry to yield a ground powder, compacting the powder and heat treating the resulting green body. Alternatively, the slurry is only-partially dried to produce a paste, which is compacted and then heat treated. A reactive monomer (plasticizer of cross-linking agent) can be added to the polymeric binder.

## Description

### BACKGROUND OF THE INVENTION

### FIELD OF THE INVENTION

This invention relates to a method of producing carbonaceous porous bodies for respiratory protection.

Exposure of military personnel and first responders to the release of toxic gases and vapours can be incapacitating and potentially lethal depending on the substance(s) released.

### DESCRIPTION OF RELATED ART

At present, close-fitting face masks including a canister containing adsorbent materials are used to provide protection from a variety of gases and vapours for a limited time. The adsorbents presently used primarily consist of granular active carbon characterized by a large internal surface area and small pores. Manufacture of the adsorbents involves the carbonization of an organic raw material (naturally derived from coal or cellulosic materials) followed by activation.

Alternatives to the traditional activated carbons for use in respiratory protection are always being sought. For example, inorganic materials may be used. There is presently considerable interest in the use of synthetic materials to prepare carbons in monolithic forms with tailored pore structures which hopefully exhibit more efficient adsorption properties.

Traditionally, gas mask canisters are filled with a carbonaceous granular material onto which inorganic and organic materials have been deposited to augment the adsorptive capacity of the carbon by initiating the chemical decomposition of some highly toxic gases to less toxic products. Physical adsorption of these products and other harmful gases is accomplished by the adsorbent material. The granular nature of the adsorbent can lead to channeling (allowing some gases to quickly penetrate the adsorbent bed) and to attrition due to mechanical vibration (the carbon breaks into smaller particles which can clog the filter, making it more difficult to breathe through).

Current activated carbons used in respiratory protection are produced by carbonization of raw materials such as wood, coal and coconut shells at temperatures below 800° in the absence of oxygen, followed by chemical or physical activation of the carbonized product. These materials show excellent adsorbent properties attributed mostly to their high surface area of 800-1500 m²/g which is contained predominantly within micropores. However, they are characterized by two major disadvantages, namely the poorly controlled distribution of pore sizes and the presence of a variety of impurities (sulphur, metals, etc.) characteristic of the naturally derived precursors which may have a deleterious effect on the carbon's performance.

In addition, carbonization results in elimination of noncarbon elements such as oxygen and hydrogen followed by grouping of the residual carbon atoms into condensed aromatic rings, which arrange themselves irregularly, leaving free small gaps between them that could be blocked by impurities thereby reducing adsorbing capacity. Moreover, simple carbonization results in products with both low surface area and low developed pore structure which leads to low adsorption capacity. Chemical or physical activation is then needed in order to enhance pore structure by transforming the carbonized material into a form that contains pores of various shapes and sizes which increase their surface area. The loosely packed adsorbent must be held within a housing and traditional filling processes limit the shape of the housing,

There is considerable interest in the use of polymers having controlled porosity as adsorbents, but carbons derived from such synthetic materials have not become widely used commercially as a result of their higher price compared to other traditional industrial adsorbents. The very high temperatures associated with the pyrolysis of state of the art foams made from products such as phenolic resins are energy intensive in both the production of the starting material and in the development or recovery of the absorbing capacity of the original carbonaceous materials.

The present invention provides a method of producing high surface area (up to 2800 m² g⁻¹) carbonaceous materials from various feedstock, and more specifically, the production of porous bodies (open cell foams, called foams for simplicity) that possess interesting properties while being easier and/or cheaper to produce than the existing products.

High surface area carbonaceous materials are used in filtration products (US 6,258,864 and references therein), gas accumulators (US 6,309,449), thermal and structural applications (US 7,166,237) and electrochemical devices (US 5,932,185). One of the main drawbacks with the use of carbonaceous materials is that they come in loose form as a rather fragile and brittle material (carbon fibres that behave like a hard ceramic or glass) or as a loose powder (carbon black that is very easily deformed and compressed). In both cases, engineers have devised different clever means by which the carbonaceous materials are mixed or immobilized within a matrix (polymer, gel or ceramic are good examples of matrixes) depending on the final product requirements. However, immobilizing high surface area carbonaceous materials within a matrix requires careful design and engineering to avoid filling the pores or diluting the high surface area material so much that the resulting product is useless. A balance is therefore always reached between the mechanical properties and surface properties of such mixtures containing the carbonaceous materials.

Very early on, researchers recognized the difficulty in making dense products from the raw, loose carbonaceous powders and they circumvented this by applying pressure during various stages of the production process (compression molding in US 3,634,569). Other researchers exploited this in order to produce porous bodies used in the applications mentioned above (see GB 1,132,458). The researchers mentioned that the pyrolysis of a mixture of carbonaceous filler with carbon containing binder produces a broad pore size distribution. They related this to the production of a carbonaceous residue within the structure of the porous body caused by the degradation of the carbon containing binder. It is very important to master this concept since two approaches have generally been studied in the field of porous bodies. The first one tries to avoid the issue of the decomposing binder entirely while the second one seeks to take advantage of it for producing porous bodies.

Although there are many patents on the production of porous carbon foams, they can be subdivided into those that have for starting materials only an organic precursor (polymer, monomer, hydrocarbon, plant or animal based products), those that combine an organic material with a carbonaceous material and a third group that does not fall within the other two categories.

In the first category, heating the organic products to a sufficient temperature causes gases to evolve thus creating the foam; typical organic products that have been employed are pitch (US 7,166,237 and references therein, and US 6,033,506), coal (US 5,888,469), olive stones (R.V.R.A. Rios, M. Martinez-Escandell, M. Molina-Sabio, F. Rodiguez-Reinoso, Carbon 44, 2006, 1448-1454), thermosetting resins such as phenolic resins (US 3,345,440, US 3,342,555) and aerogels (G. Biesmans, A. Mertens, L. Duffours, T. Woignier, J. Phalippou, J. Non-Cryst. Solids, 1998, 225, 64-68). In all of these, the basic approach is to heat the organic products to elevated temperatures often well beyond 500°C and most likely well beyond 1000°C to produce a carbonaceous material. The pyrolysis at elevated temperatures can be followed by oxidation steps, also referred to as activation steps, to increase the surface area of the resulting foam.

The second category is one in which an organic material, generally called binder, is mixed with the carbonaceous materials and the mixture is heated to an elevated temperature. A good example of this approach is a mixture of phenolic resin and exfoliated graphite flakes (US:6,689,295) heated to temperature as high as 2500°C in an inert atmosphere. Other carbonaceous materials can be mixed with organic precursors and the most common are carbon fibres (US 5,972,253, WO 96/36473). A broad description of carbon powders encompassing a number of carbonaceous materials is also described in US 5,636,437 where again elevated temperatures, 1050°C, are attained. The same group of inventors is named in US 6,332,990 Moreover, the mixtures do not necessarily need to be pyrolyzed to such high temperatures and US 5,789,338 mentions the possibility of pyrolizing the mixtures containing resorcinol formaldehyde binder to only 600°C. WO/US95/060002 mentions pyrolyzing polyacrylonitrile containing mixture to only 500°C.

In the third category, the use of inorganic silica templates and organic precursors leads to the creation of interesting foams, but with the need to remove the silica after pyrolysis with hydrofluoric acid (J. Lee, S. Han and T. Hyeon, J. Mater. Chem., 2004, 14, 478-486). This could be a major concern especially for large scale manufacturing operations.

It has been observed that some carbonaceous powders do not compact very well and that in some cases it is nearly impossible to produce dense parts (N. Cunningham, M. Lefevre, J.P. Dodelet, Y. Thomas and S. Pelletier, Carbon, 43, 2005, 3054-3066). Recently it was found that dry powders of certain carbonaceous materials (such as Carbon black XC-72R or BP 2000 from Cabot Corp.) could be compacted and they would produce green parts of low density (0.2-1.0 g cm⁻³) that could barely be handled without crumbling.

### BRIEF SUMMARY OF THE INVENTION

In general terms, the porous, carbonaceous body is produced by mixing a carbonaceous powder with a polymeric binder and a solvent to create a slurry: drying the slurry to produce a raw mixture; grinding the raw mixture; compacting the ground raw mixture to form a green body; and heat treating the green body to yield the porous carbonaceous body

In accordance with the present invention, organic binders that decompose at much lower temperatures, i.e., below 800°C and preferably below 500°C are selected. If necessary, a reactive monomer that has at least two reactive groups is added to the mixture. The monomer could also be called a reactive plasticizer or a cross-linking agent depending on the system studied. When 5 to 30 wt% of the organic binder (with or without the reactive plasticizer) is added to the carbonaceous material, the resulting mixture can be compacted in a simple die (between, for example 1000 and 6000 psi) to produce the desired shape of so-called green bodies. It has been found that the green bodies can be heat treated to temperatures below 500°C for less that 5 hours (preferably less than 2 hours), that the resulting fired part is porous with densities ranging from 0.2 to 1 g cm⁻³, mechanically resistant and that the surface area of the final part can be superior to that of the original carbonaceous powder. The final fired parts have also been found to conserve their initial shape with variations in thicknesses of less than about 10% in the direction of the compaction forces and virtually no change in dimension in the direction perpendicular to the compaction force when measured before and after the heat treatment process.

### BRIEF DESCRIPTION OF THE DRAWINGS

The invention is described below in greater detail with reference to the accompanying drawings, wherein:
Figure 1 is a flow diagram of a process in accordance with the present invention.
Figures 2 and 3 are graphs showing the results of thermographic analysis of various raw materials used in the process of the invention;
Figure 4 is a graph showing the results of thermographic analysis of reactive plasticizer-polymer systems used in the process of the invention;
Figure 5 is a bar graph showing the effect of compaction pressure on mixture of polymethyl methacrylate and a carbon black powder;
Figure 6 is a flow diagram of an alternative process in accordance with the invention;
Figure 7 is a graph showing the results of thermographic analysis of polyvinyl alcohol and hexamethyl methoxy melamine alone and in combination;
Figure 8 is a graph showing the pressure drop through a foam in accordance with the invention;
Figure 9 is a graph showing the results of thermographic analysis of table sugar; and
Figure 10 is a graph showing the pressure drop through a carbon monolith filter with and without a sugar filler.

### DETAILED DESCRIPTION OF THE INVENTION

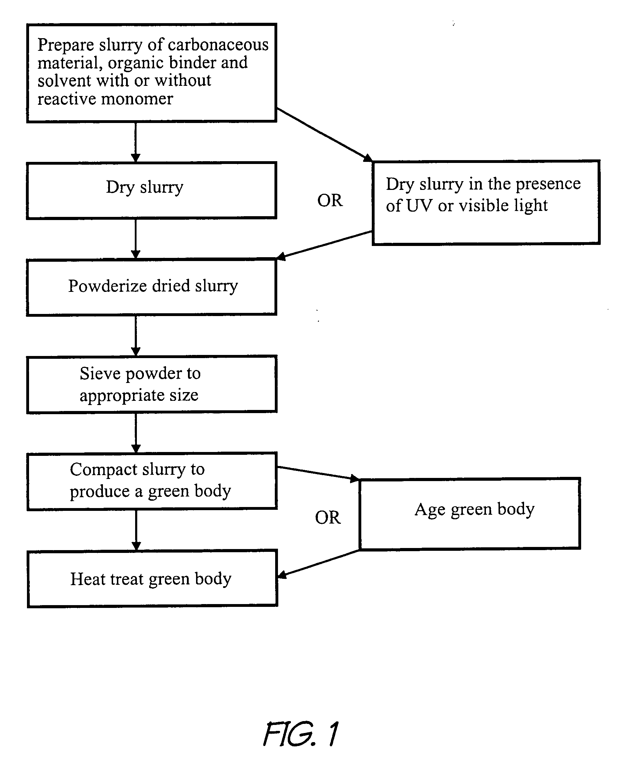

In slightly more specific terms, the process for producing the carbonaceous porous body illustrated schematically in Fig. 1 includes the following steps:
1. Carbonaceous powders are mixed with a polymeric binder (with or without a reactive monomer) and a solvent to create a slurry.
2. The slurry is dried and powderized.
3. During drying, radiation in the form of UV or visible light can be present.
4. Once dried the resulting raw mixture is ground in a blade, hammer, ball mill or cryogenic grinder.
5. The ground mixture is sieved to an appropriate size.
6. The sieved mixture is placed in a uniaxial or biaxial compaction die and pressed to a pressure between 1000 psi and 20,000 psi and aged (or directly placed in an oven, skipping step 7).
7. The green body is taken out of the die and aged at a chosen temperature between 1 minute and 30 days before being heat treated to the final temperature.
8. The heat treatment process is carried out in an air or inert environment with temperatures and heating ramps chosen according to the chemicals used.

The invention is described below in greater detail in the following examples and with reference to the accompanying drawings.

### Example 1

Polymers tested were chosen to decompose to a very low char yield at a temperature below 500°C. Char yield, in percent, can be defined here as the ratio of the weight remaining after the heat treatment process over the initial dry weight of the material. The polymers include polystyrene (PS) having an average MW 250 000, polyvinyl alcohol (PVA), polymethyl methacrylate (PMMA) average MW 75000, polyvinyl ethyl ether (PVEE) having an average MW 75 000 and poly(styrene-co-acrylonitrile) (SAN) 25% (w/w) acrylonitrile having an average MW 165 000. The reactive plasticizers were diphenyldiacetylene (DPDA) (1,4-diphenylbutadiyne) 99% supplied by Avocado Research Chemicals, 1,3-diethynylbenzene (DEB) 97% supplied by Sigma Aldrich, 1,7-octadiyne (ODY) 98% supplied by Alfa Aesar and hexamethyl methoxy melamine (HMMM). The carbonaceous powders can be Black Pearl L 3525 (hereinafter BPL 3525), currently available as Black Pearl L (hereinafter BPL), XC-72R and BP 2000 available from Cabot Corporation, acetylene black, furnace black or expended graphite powders.

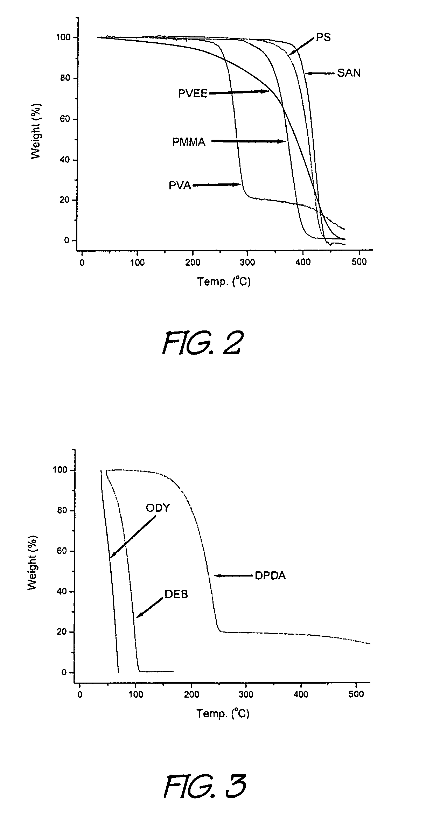

The thermogravimetric analysis (TGA) of various raw materials used is set out in Figs. 2 and 3 where a platinum pan holder was used and the heating ramp set at 10°C min⁻¹. Fig. 2 shows the TGA of polymers and Fig. 3 shows the TGA of the reactive monomers used in the examples.

It can be observed that the raw materials behave quite differently. On the polymer side, the PVEE has a much more constant weight loss than the three other polymers and does not exhibit any region where a dramatic weight loss is observed. On the other hand, only PVA seems to be able to produce any significant amount of char once 475°C is reached. For PVEE, PMAA and PS an insignificant amount of char (below 0.05% weight) is obtained upon reaching that temperature. In the case of SAN no char is observed.

Because of the complexity in removing all solvent when slurries are made in the presence of high surface area carbonaceous materials, the polymer -reactive plasticizers system was studied as recast into thin film. The results obtained may differ from those for a porous 3-D body due to the fact that when pyrolyzed within a porous body, it is harder for the chemicals to escape to the atmosphere as opposed to the thin film case where the chemicals can boil or sublimate and easily reach the atmosphere.

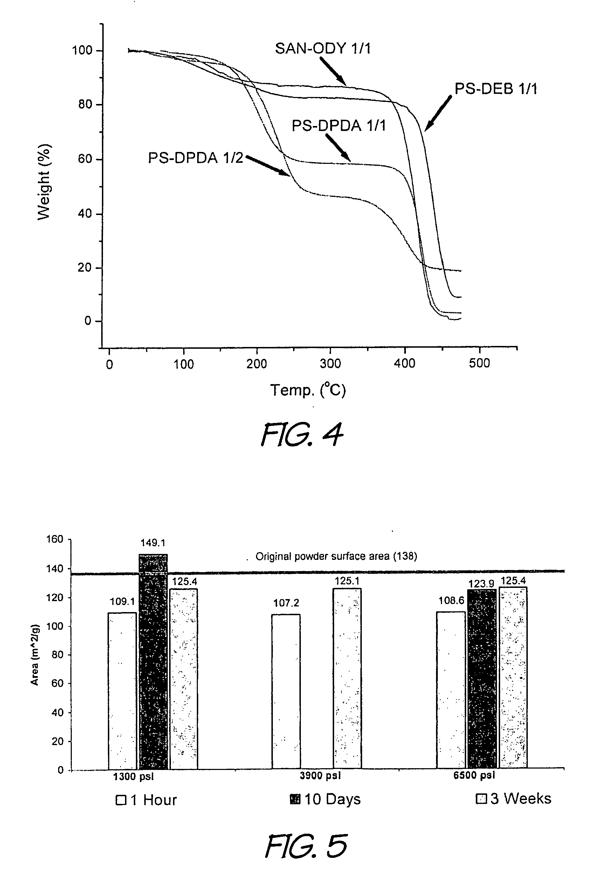

Figure 4 shows the results of some of the thermogravimetric studies performed on the reactive plasticizer - polymer system, In Fig. 4, the number beside the compound names refers to the weight ratio. Thus a 1/2 wt/wt means that for every gram of polymer 2 grams of reactive plasticizers were added. The analysis of the curves contained in Fig. 4 is very informative. The addition of ODY to SAN had no real impact on the char yield whereas the addition of DEB and DPDA increased the char yield for PS. For DPDA, adding more increased the char yield significantly. The TGA results presented in Fig. 4 were used to determine the processing parameters to produce foams and porous bodies.

The first set of parameters studied was the pressure applied to the die during the compaction process, and the delay between compaction and the time at which the PMMA containing green bodies were placed in a preheated oven at 375-400°C for 1 hour. In this entire section, the samples were simply stored at room temperature exposed to air but in a dark location.

Figure 5 illustrates the effect of compaction pressure maintained for about 10 sec on mixtures of PMMA and Black Pearl L 3525. Table 1 below provides comparisons between the surface area of various foams obtained by varying the compaction pressure and delay between compaction and heat treatment for pure PMMA binder and BPL 3525.

**Table 1**

| Carbon Black | Area (m²/g) | 15 wt.% PMMA BPL3525 B-2* 1 Hour wait time before pyrolysis | Area (m²/g) | 15 wt.% PMMA BPL3525 B-3* 10 days wait time before pyrolysis | Area (m2/g) | 15 wt.% PMMA SPL3525 B-1* 3 weeks wait time before pyrolysis | Arca (m²/g) |
|---|---|---|---|---|---|---|---|
| BPL 3525 | 137.3 | 1300 psi | 109.1 | 1300 psi | 149.1 | 1300 psi | 125.4 |
| | 137.3 | 3900 psi | 107.2 | 3900 psi | | 3900 psi | 125.1 |
| | 137.3 | 6500 psi | 108.6 | 5400 psi | 123.9 | 6500 psi | 125.4 |

| | | | | | | | |
|---|---|---|---|---|---|---|---|
| *All the tables present data that were averaged over a minimum of three samples over at least two different batches and in some cases as many as 6 duplicates were tested. Some error analysis still has to be completed but initial results would tend to show an error around 5%. | | | | | | | |

It appears that the final surface area of the porous foams can be controlled by selecting the delay between compaction and heat treatment using the pure PMMA binder. A 10 day delay when the materials are compacted at 1300 psi appears to be the only combination that improved the surface of the resulting foam compared to the original carbon black powder.

Other binders were tested and pure PVEE gave very good results that are found in Table 2. For PVEE, the heat treatment involved slowly heating the green bodies from 30 to 475°C over a period of at least 1.5 hour and then maintaining the maximum temperature for a full hour. Table 2 provides comparisons between the surface area of various foams obtained by varying the compaction pressure and the delay between compaction and heat treatment for pure PVEE binder and BPL 3525.

**Table 2**

| Carbon black | Arca (m²/g) | 15wt.% PVEE BPL3525 B-1* 1 Hour wait time before pyrolysis Compaction pressure | Area (m²/g) | 15wt.% PVEE BPL3525 B-2 * 8 days time before pyrolysis Compaction pressure | Area (m²/g) |
|---|---|---|---|---|---|
| BPL 3525 | 137.3 | 1300 psi | 311.8 | 1300 psi | 176.1 |
| | 137.3 | 3900 psi | 139.9 | 3900 psi | 188.7 |
| | 137.3 | 6500 psi | 261.9 | 6500 psi | 198.1 |

When PVEE is used, all of the foams produced had higher surface areas than the original carbon black powder. This time, waiting one hour when the compaction pressure was only 1300 psi gave the best result, nearly 3.3 times higher surface area. Compaction pressure also appears to influence the final surface area when PVEE is used.

It is possible to obtain foam by replacing BPL 3525 by another Cabot product XC-72R and the results for the foam prepared are reported in Table 3, which provides comparisons between the surface area of various foams obtained by varying the compaction pressure and the delay between compaction and heat treatment for pure PVEE binder and XC-72R.

**Table 3**

| Carbon black | Area (m²/g) | 15 wt.% PVEE XC-72R B-1* 1 Hour wait time before pyrolysis Compaction pressure | Area (m²/g) | 15 wt.% PVEE XC-72R B-1 *7 days time before pyrolysis Compaction pressure | Area (m²/g) |
|---|---|---|---|---|---|
| Vulcan XC72R | | 1300 psi | 312.9 | 1300 psi | 368.0 |
| | 212.9 | | | | |
| | 212.9 | 3900 psi | & | 3900 psi | 381.9 |

| | | | | | |
|---|---|---|---|---|---|
| & = experiment not performed | | | | | |

Again the surface area of all the produced foams was much higher than that of the original powders when PVEE is used.

The method described above is believed to differ from previous work based on the combination of one or many of the following: starting materials used, the low heat treatment temperatures reached and short pyrolysis time, and the low pressures and compaction time required during the compaction stage. The method of the present invention differs from precious methods mainly because of the use of organic binders that decompose at low temperatures, the use of a reactive plasticizer or cross-linking agent, and that dry powders can be compacted to form foam.

Control of the surface area and average pore volume can be achieved by simply selecting a different raw carbonaceous material or by modifying the processing parameters. An important feature of the invention is that mechanically resistant forms have been produced. The mechanical properties of the created foams have been measured. Nearly all sample presented withstood pressures in excess of 1 MPa before breaking and some withstood as much as 10 MPa.

### Example 2

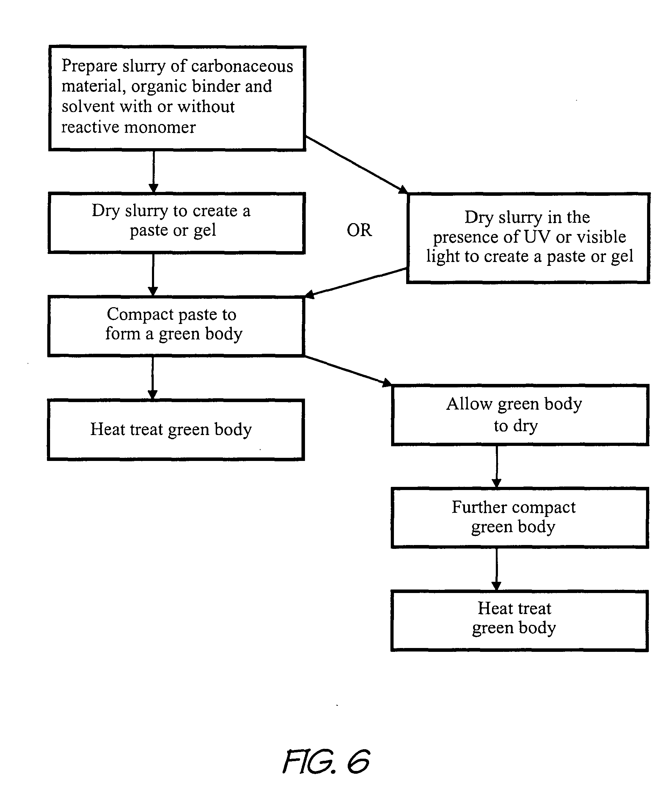

In a second approach illustrated in Fig. 6, the slurry produced is not completely dried before being compressed. A pasty mixture is first obtained using the same raw materials as mentioned in Example 1. However, more emphasis was placed on using water soluble PVA as a polymer with either urea or hexamethyl methoxy melamine (HMMM), with or without an acid catalyst, as cross-linking compounds. The fact that these compounds are all water soluble facilitates the development process. Samples have been obtained using other organic binders such as PVEE and PMMA.

Briefly, the second method includes the following steps:
1. Carbonaceous powders are mixed with a polymeric binder, with or without a reactive monomer (plasticizer), and a solvent to create a slurry.
2. The slurry is partially dried as to create a gel or a viscous pasty mixture.
3. During the drying procedure, radiation in the form of UV or visible light can be present.
4. The pasty mixture is placed in a uniaxial or floating die compaction die and pressed to a pressure between 1 psi and 10 000 psi.
5. The green body is further allowed to dry or is directly placed in an oven (skip directly to 7).
6. The dried paste is recompressed to a pressure between 1 and 10 000 psi.
7. The heat treatment process is carried out in an air or inert environment with temperatures and heating ramps chosen according to the chemicals used.

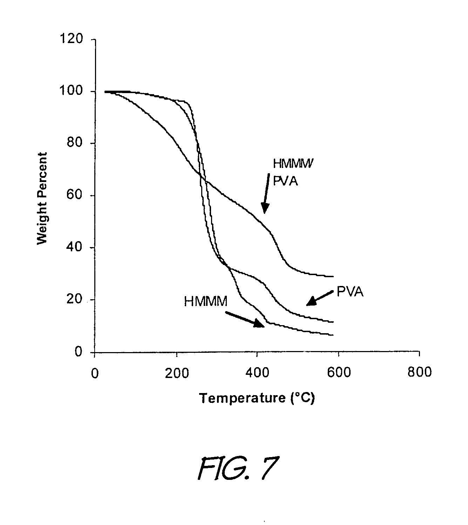

As described for other polymers, PVA can be cross-linked with HMMM and thermographic studies were performed to select the processing parameters. Figure 7 provides the results of the TGA of the pure PVA, pure HMMM and a mixture (50 wt.% of each) containing both. A catalytic amount of about 3 wt.% of acetic acid was added to mixture.

The weight remaining after pyrolysis in the case of the mixture is of about 27% at 600°C and is well above the weight remaining for any of the pure compounds. This very high char ratio is also above any of the polymer reactive plasticizers that have been presented so far. In the slurry process, it was observed that the surface area can easily be tailored by mixing together different raw carbonaceous materials. The results are presented in Tables 4 and 5. Table 4 provides the surface areas made, depending on the raw carbon black, and Table 5 lists the surface areas of various carbon monoliths all initially containing 20 wt.% of PVA.

**Table 4**

| Carbon black | Area (m²/g) | Material description Material description | |
|---|---|---|---|
| BP2000 | 1488 | 15 wt.% PMMA BP2000 B-1 | Area (m²/g) |
| | | Slurry cast | 1629 |
| | | 15wt.% PVEE 50:50 (BP2000:BP3525) B-1 | Area (m²/g) |
| | | Slurry cast | 864.5 |
| | | 15wt.%PVEE 25.75 (BP2000:BP3525) B-1 | Area (m²/g) |
| | | Slurry Cast | 397 |

**Table 5**

| Gross-linking agent | BP 3525 | 27.5wt.% of both BP 2000 and BP 3525 | BP 2000 |
|---|---|---|---|
| 20°wt % Urea | 80.2m²/g | & | 942m²/g |
| 10 wt. % HMMM | 97.4m²/g | 307m²/g | & |

| | | | |
|---|---|---|---|
| & = experiment not performed or results not analyzed | | | |

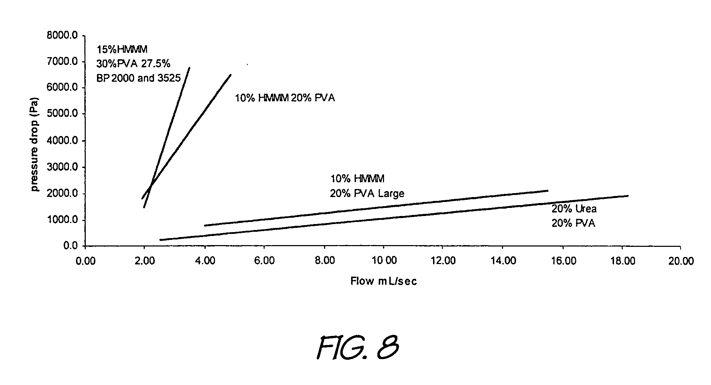

As depicted in Fig. 5, a certain control over the pressure drop through the foam can be obtained by changing the ratio and composition of the raw materials. Fig. 8 shows the pressure drop in Pa through a foam made from various raw material (BP3525 is the balance of the weight). Large indicates a 1 inch diameter foam plug while no mention of size indicates a 13 mm diameter plug. The flow is expressed in mL/sec, to express the flow in litres per minute, multiply the x axis by 0.06.

It is also possible to vary the pyrolysis temperature which will decrease the amount of polymer left in the foams in an effort to recover more surface area. This will negatively impact the mechanical properties of the resulting foams as can be seen in Table 6, which shows the effect of the pyrolysis temperature on the final compressive strength of foams made from BP 3525 with 20 wt.% PVA and 10 wt.% HMMM.

**Table 6**

| Temperature | Compressive Strength |
|---|---|
| 430°C | 18.82 MPa |
| 530°C | 4.88 MPa |
| 550°C | 3.51 MPa |

It is obvious that increasing the pyrolysis temperature has a negative impact on the mechanical properties. Preliminary results tend to show that the surface area of the foams increases with the pyrolysis temperature.

The process described in this example differs from previous methods based on the combination of one or many of the following: starting materials used, the low heat treatment temperatures reached and short pyrolysis, and the low pressures and compaction time required during the compaction stage. The proper selection of chemicals ensures that low temperatures can be used.

A major difference between this method and those described in the prior art is that a paste is first created then it is compacted at low pressures while still wet. Further drying can be performed and a second compaction step can also be added.

### Example 3

The following are additional specific examples of the preparation of porous bodies in accordance with the invention.

For a 100 g sample, 20 g of polystyrene (PS) average MW 250 000 are added to 20 g of diphenyldiacetylene (DPDA) (1,4-diphenylbutadiyne) 99% supplied by Avocado Research Chemicals. Toluene (97%+) is stirred into the mixture, which is then heated to 75°C and left to react for 30 minutes. 35 g of BPL and 35 g of BP 2000 both from Cabot Corporation (Alpharetta, GA, USA) are added to the organic mixture, and the resulting mixture is stirred until an homogeneous mixture is obtained. The slurry is kept warm to allow some of the solvent to evaporate until the desired consistency of paste is attained. The paste is poured into a circular die and pressed to compress the sample with a load of 115N. The sample is dried in air protected from light for no more than 24 hours. The sample is then pyrolyzed under nitrogen at 380°C for 30 minutes.

### Example 4

For a 100 g sample, 20 g polystyrene (PS) average MW 250 000 are added to 20 g of 1,3-diethynylbenzene (DEB) 97%+ supplied by Sigma Aldrich. Toluene (97%+) is stirred into the mixture which is heated to 75°C and left to react for 30 minutes. 35 g of BPL and 35 g of BP 2000 are added to the organic mixture, and the resulting mixture is stirred until an homogeneous mixture is obtained. The slurry is kept warm to allow some of the solvent to evaporate until the desired consistency of paste is attained. The paste is poured into a circular die and pressed to compress the sample with a load of 115N. The sample is dried in air protected from light for no more than 24 hours. The sample is then pyrolyzed under nitrogen at 380° for 30 minutes.

### Example 5

For a 100 g sample, 20 g of PVA (Polyvinyl alcohol), 99% hydrolyzed, approx MW 86,000 is mixed with 10 g of HMMM (Pfaltz & Bauer Waterbury, CT, USA). Water is stirred into the mixture, which is then heated to 75°C, and then left to react for 30 minutes with a few drops of concentrated glacial acetic acid (ACS grade from Acros a division of Thermo Fisher Scientific). 35 g of BPL and 35 g of BP 2000 are mixed with the organic mixture until an homogeneous mixture is obtained. The mixture is poured into a circular die and pressed to compress the sample with a load of 115 N. The sample is pyrolyzed under nitrogen at 430°C for 30 minutes.

### Example 6

For a 100 g sample, 20 g of PVA (polyvinyl alcohol), 99% hydrolyzed, approx MW 86,000 are added to 20 g of urea (ACS grade Fisher Scientific Company, Ottawa, Ontario, Canada). Water is stirred into the mixture, which is then heated to 75°C and left to react for 30 minutes. 30 g of BPL and 30 g of BP 2000 are mixed with the organic mixture until an homogeneous mixture is obtained. The mixture is poured into a circular die and pressed to compress the sample with a load of 115N. The sample is pyrolyzed under nitrogen at 430°C for 30 minutes.

**TABLE 6**

| Cross-linking agent | BP 3525 | 27.5 wt % of both BP 2000 and BP 3525 | BP 2000 |
|---|---|---|---|
| 20 wt. % Urea | 80.2 m²/g | & | 942 m²/g |
| 10 wt. % HMMM | 97.4 m²/g | 307 m²/g | & |

| | | | |
|---|---|---|---|
| & = experiment not performed or results not analyzed | | | |

### Example 7

For a 100 g sample, 15 g polyvinyl ethyl ether, (PVEE) low molecular weight (available from Acros a division of Thermo Fisher Scientific) is added to isopropanol (97%+ grade from Acros a division of Thermo Fisher Scientific), and the mixture is stirred and heated to 45°C for 30 minutes. 85 g of BPL is added to the organic mixture, which is stirred until an homogeneous mixture is obtained. The mixture is poured into a glass tray and is left to evaporate while making sure to break up large aggregates. The mixture is ground until all the particles can pass through a 35 mesh sieve using a small lab mill. The mixture is compacted in a die to a pressure between 1000 psi and 1300 psi. After removing the green compact from the die, the sample is left at rest undisturbed for a period of 8 days.

The green bodies are slowly heated under a nitrogen environment from 30 to 475°C over a period of at least 1.5 hours and then maintaining the maximum temperature for a full hour.

The resulting surface area of the pyrolyzed compact is of 311.8 m²/g which is high compared to the surface area of the starting carbon black which was of 137.3 m²/g.

Control of the surface area, pressure drop and average pore volume can be achieved by simply selecting a different raw carbonaceous material or by modifying the processing parameters.

### Example 8

In order to further improve the pore structure of the monoliths, studies with organic material that dissolved in water were performed. The materials used required low decomposition temperature and accordingly saccharides were chosen because they are water soluble, readily available and have decomposition temperatures below PVA and the crosslinking agent. Furthermore, the OH containing moietes could probably interact with the crosslinking agent just as they would in PVA. The saccharides can be a mono-,di- or polysaccharides such as glucose, sucrose (table sugar) and starch, respectively.

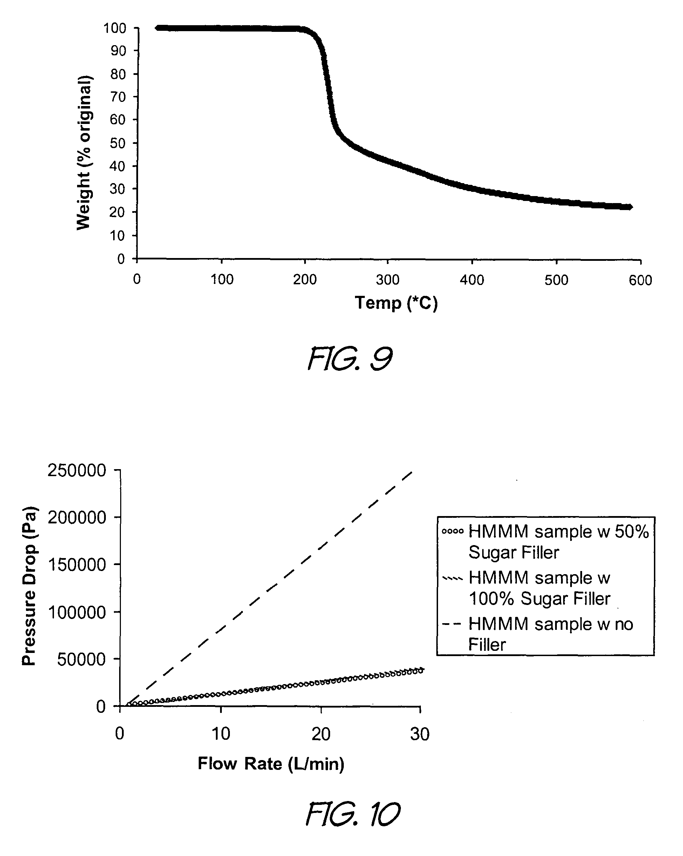

Using the method of production described above in Examples 1 and 7, samples were produced by adding the sugar filler before the pressing stage of the process. Figure 9 shows the results of a thermographic analysis of the pure table sugar used in trials. The polymer and binder used are polyvinyl alcohol (PVA) and hexamethyl methoxy melamine (HMMM), respectively. Table 7 lists the raw materials used and the trials with sugar filler showed that the samples retained shape unlike many others that were experimented with and testing results show the fillers that were added improved the material porosity and surface area. As shown in Table 7, when comparing samples, the samples with sugar as filler showed to have the highest surface area and was closest to the actual surface area of (138m²/g) as determined by BET.

**Table 7**

| Crosslinking Agent | Temp (°C) | Filler | SA (m²/g) |
|---|---|---|---|
| HMMM | 350 to 450 | None | 92.63 |
| HMMM | 375 to 475 | None | 94.37 |
| HMMM | 350 to 450 | 50% Sugar | 54.08 |
| HMMM | 375 to 475 | 50% Sugar | 83.4 |
| HMMM | 275 to 375 | 100% Sugar | 6 |
| HMMM | 325 to 425 | 100% Sugar | 22 |
| HMMM | 350 to 450 | 100% Sugar | 14.13 |
| HMMM | 375 to 475 | 100% Sugar | 62.17 |
| HMMM | 375 to 475 | 100% Sugar | 98 |
| HMMM | 300 to 500 | 100% Sugar | 121 |

To determine the mechanical strength of the material, the test samples were subjected to compression tests. The results of the compression testing (Table 8) showed the samples with fillers were able to withstand the compression force it was subjected to.

**Table 8**

| Polymer/ Binder | Filler | Pyrolisis | Max Load (N) | Compressive Strength (Mpa) |
|---|---|---|---|---|
| HMMM | 50% Sugar | 350 to 450 | 101.36 | 0.16 |
| HMMM | 50% Sugar | 375 to 475 | 64.13 | 0.1 |
| HMMM | 100% Sugar | 350 to 450 | 121.22 | 0.2 |
| HMMM | 100% Sugar | 375 to 475 | 97.81 | 0.16 |

Lastly, as illustrated in Fig. 10, pressure drop testing showed that the monoliths created using saccharides adds to the porosity of the sample. In Fig. 10, a sample created without saccharides is compared to samples created with saccharides.

## Claims

1. A process for preparing a porous, carbonaceous body comprising the steps of:
mixing a carbonaceous powder with a polymeric binder and a solvent to create a slurry:
drying the slurry to produce a raw mixture;
grinding the raw mixture;
compacting the ground raw mixture to form a green body; and
heat treating the green body to yield the porous carbonaceous body.

2. The process of claim 1, wherein the polymeric binder is selected from the group consisting of polystyrene, polyvinyl ethyl ether, polyvinyl alcohol, polymethyl methacrylate and poly(styrene-co-acrylonitrile).

3. The process of claims 1 or 2, wherein the carbonaceous powder is selected from the group consisting of carbon black, acetylene black, furnace black and expanded graphite powders.

4. The process of any of the preceding claims, wherein a reactive monomer is added to the polymeric binder before mixing with the carbonaceous material.

5. The process of claim 4, wherein the reactive monomer is selected from the group consisting of diphenyldiacetylene, 1,4-diphenylbutadiyne, 1,3-diethylnylbenzene, 1,7-octadiyne and hexamethylmethoxy melamine.

6. The process of any of the preceding claims, wherein following compaction, the green body is heat aged before being heat treated to a final temperature.

7. The process of claim 1, wherein the carbonaceous powder is carbon black powder, the polymeric binder is one of polymethyl methacrylate and polyvinyl ethyl ether, and the solvent is water.

8. The process of claim 7, including the step of leaving the ground raw mixture standing at room temperature for 1 hour to 8 days before compaction.

9. The process of claim 4, wherein the carbonaceous powder is carbon black, the polymeric binder is selected from the group consisting of polyvinyl alcohol, polyvinyl ethyl ether and polymethyl methacrylate, the reactive monomer is one of hexamethylmethoxy melamine and urea, and the solvent is water.

10. The process of claim 1, wherein the carbonaceous powder is carbon black powder, the polymeric binder is polyvinyl ethyl ether and the solvent is isopropanol.

11. A process for producing a porous carbonaceous body comprising the steps of:
mixing a carbonaceous powder with a polymeric binder to create a slurry;
partially drying the slurry to create a paste;
compacting the paste to form a green body; and
heat treating the green body to yield the porous, carbonaceous body.

12. The process of claim 11, wherein a reactive monomer is added to the polymeric binder.

13. The process of claim 11 or 12, wherein the compacted green body is allowed to dry and is further compacted before heat treated.

14. The process of claim 12, wherein the carbonaceous powder is carbon black, the polymeric binder is polystyrene, the reactive monomer is diphenyldiacetylene and the solvent is toluene.

15. The process of claim 12, wherein the carbonaceous powder is carbon black, the polymeric binder is the polystyrene, the reactive monomer is 1,3-diethynylbenene and the solvent is toluene.

16. The process of claim 4, wherein a saccharide is added to the ground raw mixture before compaction.

17. The process of claim 16, wherein the saccharide is selected from the group consisting of glucose, sucrose and starch.

18. The process of claim 16, wherein the carbonaceous powder is carbon black powder, the polymeric binder is polyvinyl alcohol, the reactive monomer is hydroxymethyl melamine, the saccharide is table sugar and the solvent is water.
